# EUROPÄISCHE PATENTSCHRIFT

(11) **EP 3 458 423 B1**
(45) Veröffentlichungstag und Bekanntmachung des Hinweises auf die Patenterteilung: **01.07.2020**
(21) Anmeldenummer: 17712097.9
(22) Anmeldetag: 20.03.2017
(51) Int. Cl.: C03C 17/36

(54) **TRANSPARENTE SCHEIBE**
TRANSPERENTE WINDOW
VITRE TRANSPARENTE

(30) Priorität: 17.05.2016 EP 16169823
(43) Veröffentlichungstag der Anmeldung: 27.03.2019
(73) Patentinhaber: SAINT-GOBAIN GLASS FRANCE, 92400 Courbevoie (FR)
(72) Erfinder: FISCHER, Klaus, 52477 Alsdorf (DE); KÜHNE, Matthias, 04860 Torgau (DE); HORNSCHUH, Sandra, 04860 Torgau (DE); ZIMMERMANN, Roberto, 42653 Solingen (DE); HENSELER, Martin, 78315 Radolfzell (DE); SCHAEFER, Dagmar, 52134 Herzogenrath (DE); JANSEN, Michael, 52249 Eschweiler (DE)
(74) Vertreter: Weber, Sophie
(86) Internationale Anmeldenummer: PCT/EP2017/056479
(87) Internationale Veröffentlichungsnummer: WO 2017/198362

(56) Entgegenhaltungen:
- WO-A1-2012/052315
- WO-A1-2013/104439

## Beschreibung

Die Erfindung betrifft eine transparente Scheibe mit einer elektrisch leitfähigen Beschichtung, ein Verfahren zur Herstellung der Scheibe und deren Verwendung.

An die Verglasung von Kraftfahrzeugen werden hohe Anforderungen gestellt. Hinsichtlich der Größe des Sichtbereichs und der strukturellen Stabilität der Scheiben gelten folgende gesetzlichen Vorschriften:
- ECE R 43: "Einheitliche Vorschriften für die Genehmigung des Sicherheitsglases und der Verbundglaswerkstoffe" sowie
- Technische Anforderungen an Fahrzeugteile bei der Bauartprüfung § 22 a StVZO, "Sicherheitsglas".

Diese Vorschriften werden in der Regel durch Verbundglasscheiben erfüllt. Verbundglasscheiben bestehen aus zwei oder mehreren Einzelscheiben, insbesondere aus Floatglas und werden mit einer oder mehreren Zwischenschichten bei Hitze und Druck fest miteinander verbunden. Die Zwischenschichten bestehen meist aus thermoplastischen Kunststoffen wie Polyvinylbutyral (PVB) oder Ethylenvinylacetat (EVA).

Die Scheibe kann eine elektrische Heizfunktion aufweisen, die auf transparenten, elektrischen Beschichtungen basiert. Solche elektrisch leitfähige Beschichtungen können mehrere metallische und dielektrische dünne Schichten aufweisen. Beschichtungen auf der Basis von dünnen Silberschichten sind kostengünstig herstellbar und alterungsstabil.

Solche elektrisch leitfähigen Beschichtungen können als Beschichtungen mit reflektierenden Eigenschaften für den Infrarotbereich oder auch als beheizbare Beschichtungen verwendet werden. WO 03/024155 A2 offenbart beispielsweise eine elektrisch leitfähige Beschichtung mit zwei Silberlagen.

Aus der WO 2012/052315 A1 ist eine transparente Scheibe mit einer elektrisch beheizbaren Beschichtung bekannt, wobei die elektrisch beheizbare Beschichtung übereinander angeordnete funktionelle Schichten aufweist.

Die Aufgabe der vorliegenden Erfindung besteht darin, eine transparente Scheibe mit verbesserter elektrisch leitfähiger Beschichtung bereitzustellen. Die elektrisch leitfähige Beschichtung soll verbesserte reflektierende Eigenschaften aufweisen.

Die Aufgabe der vorliegenden Erfindung wird erfindungsgemäß durch eine transparente Scheibe mit einer elektrisch leitfähigen Beschichtung gemäß Anspruch 1 gelöst. Bevorzugte Ausführungen gehen aus den Unteransprüchen hervor. Ein Verfahren zur Herstellung der transparenten Scheibe mit elektrisch leitfähiger Beschichtung und eine Verwendung der transparenten Scheibe gehen aus weiteren Ansprüchen hervor.

Die erfindungsgemäße transparente Scheibe umfasst mindestens ein transparentes Substrat und mindestens eine elektrisch leitfähige Beschichtung auf mindestens einer Oberfläche des transparenten Substrats, wobei die elektrisch leitfähige Beschichtung mindestens vier übereinander angeordnete funktionelle Schichten aufweist und jede funktionelle Schicht mindestens umfasst
- eine Schicht optisch hochbrechenden Materials mit einem Brechungsindex ≥ 1,3,
- oberhalb der Schicht optisch hochbrechenden Materials eine erste Anpassungsschicht,
- oberhalb der ersten Anpassungsschicht eine elektrisch leitfähige Schicht,
- oberhalb der elektrisch leitfähige Schicht eine zweite Anpassungsschicht,
wobei die Schichtdicke jeweils einer der elektrisch leitfähige Schichten von 5 nm bis 25 nm und die Gesamtschichtdicke aller elektrisch leitfähig Schichten von 20 nm bis 100 nm beträgt und zumindest eine zwischen zwei elektrisch leitfähigen Schichten angeordnete Schicht optisch hochbrechenden Materials eine Schicht eines dielektrischen Materials mit einem Brechungsindex kleiner oder gleich 2,1 und eine Schicht eines optisch hochbrechenden Materials mit einem Brechungsindex größer oder gleich 2, 1 umfasst und oberhalb der obersten funktionellen Schicht eine weitere Schicht optisch hochbrechenden Materials mit einem Brechungsindex ≥ 1,9 angeordnet ist.

Ist eine erste Schicht oberhalb einer zweiten Schicht angeordnet, so bedeutet dies im Rahmen der vorliegenden Erfindung, dass die erste Schicht weiter von dem Substrat, auf das die Schichten aufgebracht sind, entfernt angeordnet ist als die zweite Schicht. Ist eine erste Schicht unterhalb einer zweiten Schicht angeordnet ist, so bedeutet dies im Rahmen der vorliegenden Erfindung, dass die zweite Schicht weiter von dem Substrat, auf das die Schichten aufgebracht sind, entfernt angeordnet ist als die erste Schicht.

Eine Schicht im Sinne der Erfindung kann aus einem Material bestehen. Eine Schicht kann aber auch zwei oder mehrere Einzelschichten unterschiedlichen Materials umfassen. Eine erfindungsgemäße funktionelle Schicht umfasst beispielsweise zumindest eine Schicht optisch hochbrechenden Materials, eine erste und eine zweite Anpassungsschicht und eine elektrisch leitfähige Schicht.

Die Gesamtschichtdicke aller elektrisch leitfähigen Schichten der gesamten elektrisch leitfähigen Beschichtung beträgt erfindungsgemäß von 20 nm bis 100 nm. In diesem vorteilhaften Bereich für die Gesamtdicke aller silberhaltigen Schichten wird bei typischen Abständen h zwischen zwei Sammelleitern und einer Betriebsspannung U von 12 V bis 15 V vorteilhaft eine ausreichend hohe Heizleistung P und eine ausreichend hohe Transmission erreicht. Die Beschichtung weist in der Regel Flächenwiderstände im Bereich von 0,5 Ohm/Quadrat bis 1 Ohm/Quadrat auf.

Jede funktionelle Schicht der erfindungsgemäßen elektrischen leitfähigen Beschichtung weist zumindest eine zwischen zwei elektrisch leitfähigen Schichten angeordnete Schicht optisch hochbrechenden Materials auf, die eine Schicht eines dielektrischen Materials mit einem Brechungsindex kleiner oder gleich 2,1 und eine Schicht eines optisch hochbrechenden Materials mit einem Brechungsindex größer oder gleich 2, 1 umfasst.

Der besondere Vorteil der Erfindung liegt in der Ausgestaltung zumindest einer zwischen zwei elektrisch leitfähigen Schichten angeordneten Schicht optisch hochbrechenden Materials, welche erfindungsgemäß mindestens eine Schicht eines dielektrischen Materials mit einem Brechungsindex kleiner 2,1 und mindestens eine Schicht eines optisch hochbrechenden Materials mit einem Brechungsindex größer oder gleich 2,1 umfasst. Es hat sich überraschend gezeigt, dass ein solcher Schichtaufbau zu einer hohen Transmission und Farbneutralität führt und damit die reflektierenden Eigenschaften der Beschichtung erheblich verbessert.

Eine Schicht optisch hochbrechenden Materials liegt im Sinne der Erfindung zwischen zwei elektrisch leitfähigen Schichten, wenn zumindest eine elektrisch leitfähige Schicht oberhalb der Schicht optisch hochbrechenden Materials und wenn eine elektrisch leitfähige Schicht unterhalb der Schicht optisch hochbrechenden Materials angeordnet ist. Diese Anordnung erfordert aber nicht einen direkten Kontakt zwischen der elektrisch leitfähigen Schicht und der Schicht optisch hochbrechenden Materials.

Vorzugsweise kann die erste und/oder die zweite Anpassungsschicht ein Zinkoxid enthalten. Eine bevorzugte Ausführung der Erfindung sieht vor, dass die Dicke der Schicht optisch hochbrechenden Materials 10 nm bis 100 nm betragen kann, wobei eine zwischen zwei elektrisch leitfähigen Schichten angeordneten Schicht optisch hochbrechenden Materials mindestens eine Dicke von 20 nm aufweist. Des weiteren kann die Schicht hochbrechenden Material einen Brechungsindex größer oder gleich 1,9 aufweisen und/oder zumindest Siliziumnitrid oder Silizium-Metall-Mischnitrid, wie SiZrN und Gemische davon enthalten.

In einer besonders bevorzugten Ausgestaltung der erfindungsgemäßen transparenten Scheibe enthält die Schicht optisch hochbrechenden Materials ein Silizium-Zirkonium-Mischnitrid. Das Silizium-Zirkonium-Mischnitrid wird bevorzugt mit einem Target abgeschieden, welches von 40 Gew. % bis 70 Gew. % Silizium, von 30 Gew. % bis 60 Gew. % Zirkonium sowie herstellungsbedingte Beimengungen enthält. Das Target enthält besonders bevorzugt von 45 Gew. % bis 60 Gew. % Silizium, von 40 Gew. % bis 55 Gew. % Zirkonium sowie herstellungsbedingte Beimengungen. Die Abscheidung des Silizium-Zirkonium-Mischnitrids erfolgt unter Zugabe von Stickstoff als Reaktionsgas während der Kathodenzerstäubung.

Eine weitere bevorzugte Ausgestaltung der erfindungsgemäßen transparenten Scheibe sieht eine Glättungsschicht vor, die zumindest zwischen zwei elektrisch leitfähigen Schichten, insbesondere unterhalb einer der ersten Anpassungsschichten, angeordnet sein kann. Dabei kann die Glättungsschicht ein Zink-Zinn-Mischoxid enthalten. Eine auf eine glattere Oberfläche abgeschiedene elektrisch leitfähige Schicht weist einen höheren Transmissionsgrad bei einem gleichzeitig niedrigeren Flächenwiderstand auf. Dieser Effekt ist umso günstiger, je dünner die elektrisch leitfähige Schicht ist.

In einer weiteren bevorzugten Ausgestaltung der erfindungsgemäßen transparenten Scheibe ist oberhalb der obersten funktionellen Schicht eine weitere Schicht optisch hochbrechenden Materials mit einem Brechungsindex ≥ 1,9 vorgesehen. Diese Schicht kann Siliziumnitrid als optisch hochbrechendes Material enthalten. Die Verwendung von Siliziumnitrid schützt die darunter angeordneten Schichten vor Korrosion, passt die optischen Eigenschaften der funktionellen Schichten an die der Zwischenschicht an und ist besonders kostengünstig.

Die angegebenen Werte für Brechungsindizes sind bei einer Wellenlänge von 633 nm mittels Helium-Neon-Laser gemessen.

In einer besonders bevorzugten Ausgestaltung der erfindungsgemäßen transparenten Scheibe weist die elektrisch leitfähige Schicht zumindest Silber oder eine silberhaltige Legierung auf. Die silberhaltigen Schichten enthalten mindestens 90 Gew. % Silber, bevorzugt 99,9 Gew. %. Die silberhaltigen Schichten werden mit gängigen Verfahren zur Schichtabscheidung von Metallen, beispielsweise durch Vakuumverfahren wie die magnetfeldunterstützte Kathodenzerstäubung aufgebracht.

Die Schichtdicken der Anpassungsschicht, der Glättungsschicht, der Schicht optisch hochbrechenden Materials und der silberhaltigen Schicht mit den gewünschten Eigenschaften hinsichtlich Transmission, Flächenwiderstand und Farbwerten ergeben sich für den Fachmann in einfacher Weise durch Simulationen im Bereich der oben angegebenen Schichtdicken.

In einer vorteilhaften Ausgestaltung der erfindungsgemäßen transparenten Scheibe erstreckt sich die elektrisch beheizbare Beschichtung auf mindestens 50%, bevorzugt auf mindestens 70% und besonders bevorzugt auf mindestens 90% der Fläche der Seite der Scheibe, auf die sie aufgebracht ist.

Des Weiteren ist es bevorzugt, dass zumindest eine funktionelle Schicht eine an die elektrisch leitfähige Schicht angrenzende Blockerschicht aufweist und die Blockerschicht bevorzugt zumindest Nickel, Chrom oder Legierungen davon enthält. Dabei kann die Blockerschicht eine Dicke von 0,1 nm bis 5 nm aufweisen. Die Blockerschicht zwischen zweiter Anpassungsschicht und der silberhaltigen Schicht verhindert den Kontakt der empfindlichen silberhaltigen Schicht mit der oxidierenden reaktiven Atmosphäre während der Abscheidung der folgenden Schicht aus Zinkoxid durch reaktive Kathodenzerstäubung.

Die Anpassungsschicht, die Glättungsschicht, die Schicht optisch hochbrechenden Materials, die Blockerschicht und die silberhaltige Schicht werden durch an sich bekannte Verfahren, beispielsweise durch magnetfeldunterstützte Kathodenzerstäubung abgeschieden. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff.

Das transparente Substrat kann über eine thermoplastische Zwischenschicht mit einer zweiten Scheibe zu einer Verbundscheibe verbunden sein und dabei eine Gesamttransmission größer als 70 % aufweisen. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Verbundscheibe und/oder die Zwischenschicht können einen keilförmigen Querschnitt aufweisen. Der keilförmige Querschnitt bewirkt, dass bei einer Reflexion keine zusätzlichen unerwünschten Doppelbilder entstehen.

Die elektrisch beheizbare Beschichtung erstreckt sich bevorzugt über die gesamte Fläche der Seite der Scheibe, auf die sie aufgebracht ist, abzüglich eines umlaufenden rahmenförmigen entschichteten Bereichs mit einer Breite von 2 mm bis 20 mm, bevorzugt von 5 mm bis 10 mm. Dieser dient der elektrischen Isolierung zwischen der spannungsführenden Beschichtung und der Fahrzeugkarosserie. Der entschichtete Bereich wird bevorzugt durch die Zwischenschicht oder einen Acrylatkleber als Dampfdiffusionssperre hermetisch versiegelt. Durch die Dampfdiffusionssperre wird die korrosionsempfindliche Beschichtung vor Feuchtigkeit und Luftsauerstoff geschützt. Zusätzlich kann die elektrisch beheizbare Beschichtung in einem weiteren Bereich entschichtet sein, der beispielsweise als Datenübertragungsfenster oder Kommunikationsfenster dient. Die transparente Scheibe ist in dem weiteren entschichteten Bereich für elektromagnetische und insbesondere infrarote Strahlung durchlässig.

In einer bevorzugten Ausgestaltung der erfindungsgemäßen transparenten Scheibe ist die elektrisch beheizbare Beschichtung über Sammelleiter mit einer Spannungsquelle verbunden und eine an die elektrisch beheizbare Beschichtung angelegte Spannung weist einen Wert von 12 V bis 15 V auf.

Die transparente, elektrisch leitfähige Beschichtung ist mit Sammelleitern, sogenannten bus bars, zur Übertragung elektrischer Leistung verbunden.

Die Sammelleiter werden vorteilhaft durch Aufdrucken einer leitfähigen Paste hergestellt, die vor dem Biegen und/oder beim Biegen der Glasscheiben eingebrannt wird. Die leitfähige Paste enthält bevorzugt Silber-Partikel und Glasfritten. Die Schichtdicke der eingebrannten Silber-Paste beträgt bevorzugt von 5 µm bis 20 µm.

In einer alternativen Ausgestaltung der Sammelleiter werden dünne und schmale Metallfolienstreifen oder Metalldrähte verwendet, die bevorzugt Kupfer und/oder Aluminium enthalten, insbesondere werden Kupferfolienstreifen mit einer Dicke von etwa 50 µm verwendet. Die Breite der Kupferfolienstreifen beträgt bevorzugt 1 mm bis 10 mm. Die Metallfolienstreifen oder Metalldrähte werden beim Zusammenlegen der Verbundschichten auf die Beschichtung aufgelegt. Im späteren Autoklavprozess wird durch Einwirkung von Wärme und Druck ein sicherer elektrischer Kontakt zwischen den Sammelleitern und der Beschichtung erreicht. Der elektrische Kontakt zwischen Beschichtung und Sammelleiter kann alternativ durch Auflöten oder Kleben mit einem elektrisch leitfähigen Kleber hergestellt werden.

Als Zuleitung zur Kontaktierung von Sammelleitern im Innern von Verbundscheiben werden im Fahrzeugbereich üblicherweise Folienleiter verwendet. Flexible Folienleiter, mitunter auch Flachleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Aluminium, Gold, Silber oder Zinn und Legierungen davon.

Das verzinnte Kupferband ist zur elektrischen Isolation und zur Stabilisierung auf ein Trägermaterial aus Kunststoff aufgebracht oder beidseitig mit diesem laminiert. Das Isolationsmaterial enthält in der Regel eine 0,025 mm bis 0,05 mm dicken Folie auf Polyimid-Basis. Andere Kunststoffe oder Materialien mit den erforderlichen isolierenden Eigenschaften können ebenfalls verwendet werden. In einem Folienleiterband können sich mehrere voneinander elektrisch isolierte, leitfähige Schichten befinden.

Folienleiter, die sich zur Kontaktierung von elektrisch leitfähigen Schichten in Verbundscheiben eignen, weisen lediglich eine Gesamtdicke von 0,3 mm auf. Derart dünne Folienleiter können ohne Schwierigkeiten zwischen den einzelnen Scheiben in der thermoplastischen Klebeschicht eingebettet werden.

Alternativ können auch dünne Metalldrähte als Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

In einer bevorzugten Ausgestaltung der erfindungsgemäßen transparenten Scheibe weist die elektrisch beheizbare Beschichtung eine Heizleistung von 500 W/m² bis 700 W/m² auf.

Die Erfindung umfasst weiter ein Verfahren zur Herstellung einer transparenten Scheibe mit einer elektrisch leitfähigen Beschichtung, wobei zumindest vier funktionelle Schichten nacheinander auf ein transparentes Substrat aufgebracht werden und jede funktionelle Schicht mindestens eine Schicht optisch hochbrechenden Materials mit einem Brechungsindex ≥ 1,3 umfasst, wobei oberhalb der Schicht optisch hochbrechenden Materials eine erste Anpassungsschicht, oberhalb der ersten Anpassungsschicht eine elektrisch leitfähige Schicht, oberhalb der elektrisch leitfähigen Schicht eine zweite Anpassungsschicht angeordnet sind. Die Schichtdicke jeweils einer der elektrisch leitfähige Schichten beträgt 5 nm bis 25 nm und die Gesamtschichtdicke aller elektrisch leitfähig Schichten beträgt von 20 nm bis 100 nm. Weiterhin umfasst eine zwischen zwei elektrisch leitfähigen Schichten angeordnete Schicht optisch hochbrechenden Materials
- eine Schicht eines dielektrischen Materials mit einem Brechungsindex kleiner oder gleich 2,1 und
- eine Schicht eines optisch hochbrechenden Materials mit einem Brechungsindex größer oder gleich 2, 1,
wobei oberhalb der obersten funktionellen Schicht (3) eine weitere Schicht (4.1) optisch hochbrechenden Materials mit einem Brechungsindex ≥ 1,9 angeordnet ist.

Die Erfindung umfasst weiter die Verwendung der transparenten Scheibe als Scheibe in Fahrzeugen, insbesondere als Windschutzscheibe in einem Kraftfahrzeug.

Im Folgenden wird die Erfindung anhand einer Zeichnung und eines Beispiels näher erläutert. Die Zeichnung ist eine schematische Darstellung und nicht maßstabsgetreu. Die Zeichnung schränkt die Erfindung in keiner Weise ein.

Es zeigen:
- Figur 1: einen Querschnitt durch eine Ausgestaltung der erfindungsgemäßen transparenten Scheibe mit elektrisch leitfähiger Beschichtung ,
- Figur 2: eine Draufsicht auf eine erfindungsgemäße transparente Scheibe als Teil einer Verbundscheibe, und
- Figur 3: eine Querschnittszeichnung entlang der Schnittlinie A-A' in Figur 2

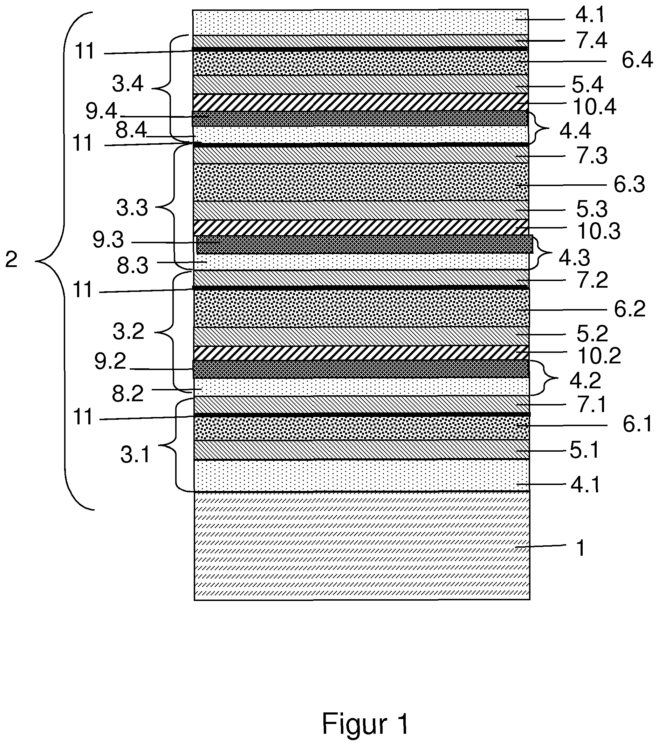

In den folgenden Figuren ist eine Ausführung der erfindungsgemäßen transparenten Scheibe am Beispiel einer Windschutzscheibe eines Personenkraftwagens dargestellt. Figur 1 zeigt eine erfindungsgemäß ausgebildete transparente Scheibe mit einem Substrat 1 und einer elektrisch leitfähigen Beschichtung 2.

Die elektrisch beheizbare Beschichtung 2 umfasst vier funktionelle Schichten 3 (3.1, 3.2, 3.3 und 3.4), die flächendeckend übereinander angeordnet sind. Jede funktionelle Schicht 3 umfasst
- eine Schicht optisch hochbrechenden Materials 4 (4.1, 4.2, 4.3 und 4.4), die Siliziumnitrid (Si3N4) enthält,
- eine erste Anpassungsschicht 5 (5.1, 5.2, 5.3 und 5.4), die Zinkoxid (ZnO) enthält,
- eine elektrisch leitfähige Schicht 6 (6.1, 6.2, 6.3, 6.4), die Silber oder eine silberhaltige Legierung enthält,
- eine zweite Anpassungsschicht 10 (10.1, 10.2, 10.3 und 10.4), die Zinkoxid (ZnO) enthält.

Die Schichten sind in der angegebenen Reihenfolge mit wachsendem Abstand zum Substrat 1 angeordnet. Oberhalb der obersten funktionellen Schicht 3.4 ist eine weitere Schicht 4.1 optisch hochbrechenden Materials mit einem Brechungsindex 1,9 bis 2,1 vorgesehen. Diese weitere Schicht und die unterste Schicht der Beschichtung 2 enthalten jeweils Siliziumnitrid (Si₃N₄) als optisch hochbrechendes Material mit einer Schichtdicken von 10 nm bis 50 nm. Die Verwendung von Siliziumnitrid als Abdeckschicht schützt die darunter angeordneten Schichten.

Die jeweils erste Anpassungsschicht 5 und die zweite Anpassungsschichten 7 enthalten Zinkoxid (ZnO) mit einem Brechungsindex 1,8 bis 2,0 und weisen Schichtdicken von 2 nm bis 20 nm, vorzugsweise 5-10 nm, auf.

Jede funktionelle Schicht 3 der elektrischen leitfähigen Beschichtung 2 weist eine zwischen zwei elektrisch leitfähigen Schichten 6 angeordnete Schicht 4.2, 4.3, 4.4 optisch hochbrechenden Materials auf, die eine Schicht 8.2, 8.3, 8.4 eines dielektrischen Materials mit einem Brechungsindex 1,9 bis 2,1 und eine Schicht 9.2, 9.3, 9.4 eines optisch hochbrechenden Materials mit einem Brechungsindex 2, 1 bis 2,3 umfasst.

Die Schicht 8.2, 8.3, 8.4 eines dielektrischen Materials mit einem Brechungsindex kleiner oder gleich 2,1 enthält Siliziumnitrid und weist eine Schichtdicke von 10 nm bis 50 nm, insbesondere 20 nm bis 40 nm, auf.

Die Schicht 9.2, 9.3, 9.4 eines optisch hochbrechenden Materials mit einem Brechungsindex größer oder gleich 2, 1 enthält Silizium-Zirkonium-Mischnitrid (SiZrNx) und weist Schichtdicken von 10 nm bis 50 nm, besonders bevorzugt 15 nm bis 30 nm, auf.

Die elektrisch leitfähige Schichten 6 (6.1, 6.2, 6.3, 6.4) enthalten Silber und weisen Schichtdicken von 5 nm bis 25 nm. Besonders bevorzugt sind Schichtdicken von 11 nm bis 18 nm. Die Gesamtschichtdicke aller elektrisch leitfähigen Schichten 6 (6.1, 6.2, 6.3, 6.4) beträgt 57 nm.

Zwischen jeder elektrisch leitfähigen Schicht 6 (6.1, 6.2, 6.3, 6.4) und der darüber angeordneten zweiten Anpassungsschicht 7 ist eine Blockerschicht 11 angeordnet. Die Blockerschicht 11 besteht beispielsweise aus einer 0,2 nm bis 0.4 nm dicken Schicht, die Nickel, Chrom oder Legierungen davon enthält und mittels magnetfeldunterstützter Kathodenzerstäubung abgeschieden wurde.

Zwischen zwei elektrisch leitfähigen Schichten 6 ist jeweils eine Glättungsschicht 10.2, 10.3, 10.4 vorgesehen, die jeweils unterhalb einer der ersten Anpassungsschichten 5.2, 5.3, 5.4 angeordnet ist. Die Glättungschichten 10.2, 10.3, 10.4 enthalten Zink-Zinn-Mischoxid (ZnSnO) und weisen Schichtdicken von 2 -20 nm, vorzugsweise 5-10 nm, auf.

Die genaue Schichtfolge mit Schichtdicken ist in Tabelle 1 dargestellt.

**Tabelle 1**

| | Bezugszeichen | | Bezugszeichen | Schichtdicke |
|---|---|---|---|---|
| Si3N4 | 4.1 | | | 20 nm - 40 nm |
| ZnO | 10.4 | | 3.4 | 5 nm - 10 nm |
| NiCr | 11 | | | 0.2 - 0.4 nm |
| Ag | 6.4 | | | 14 nm |
| ZnO | 5.4 | | | 5 nm - 10 nm |
| ZnSnO | 10.4 | | | 5 nm - 10 nm |
| SiZrN | 9.4 | 4.4 | | 15 nm - 30 nm |
| Si3N4 | 8.4 | | | 20 nm - 40 nm |
| ZnO | 10.3 | | 3.3 | 5 nm - 10 nm |
| NiCr | 11 | | | 0.2 -0.4 nm |
| Ag | 6.3 | | | 14 nm |
| ZnO | 5.3 | | | 5 nm - 10 nm |
| ZnSnO | 10.3 | | | 5 nm - 10 nm |
| SiZrN | 9.3 | 4.3 | | 15 nm - 30 nm |
| Si3N4 | 8.3 | | | 20 nm - 40 nm |
| ZnO | 7.2 | | 3.2 | 5 nm - 10 nm |
| NiCr | 11 | | | 0.2 - 0.4 nm |
| Ag | 6.2 | | | 17 nm |
| ZnO | 5.2 | | | 5 nm - 10 nm |
| ZnSnO | 10.2 | | | 5 nm - 10 nm |
| SiZrN | 9.2 | 4.2 | | 15 nm - 30 nm |
| Si3N4 | 8.2 | | | 20 nm - 40 nm |
| ZnO | 7.1 | | 3.1 | 5 nm - 10 nm |
| NiCr | 11 | | | 0.2 nm - 0.4 nm |
| Ag | 6.1 | | | 12 nm |
| ZnO | 5.1 | | | 5 nm - 10 nm |
| Si3N4 | 4.1 | | | 20 nm - 40 nm |
| Glas als Substrat | 1 | | | 2,1 mm |

Die Schicht optisch hochbrechenden Materials 4, die Glättungsschicht 10, die Anpassungsschicht 5 und 7 und die elektrisch leitfähige Schicht 6 wurden durch Kathodenstrahlzerstäubung abgeschieden. Das Target zur Abscheidung der Anpassungsschicht 5 und 7 enthielt 92 Gew. % Zinkoxid (ZnO). Das Target zur Abscheidung der Glättungsschicht 10 enthielt 68 Gew. % Zinn, 30 Gew. % Zink. Das Target zur Abscheidung der Schicht optisch hochbrechenden Materials 4 enthielt 52,9 Gew. % Silizium, 43,8 Gew. % Zirkonium. Die Abscheidung der Glättungsschicht 10 erfolgte unter Zugabe von Sauerstoff als Reaktionsgas während der Kathodenzerstäubung. Die Abscheidung der Schicht optisch hochbrechenden Materials 4 erfolgte unter Zugabe von Stickstoff als Reaktionsgas während der Kathodenzerstäubung.

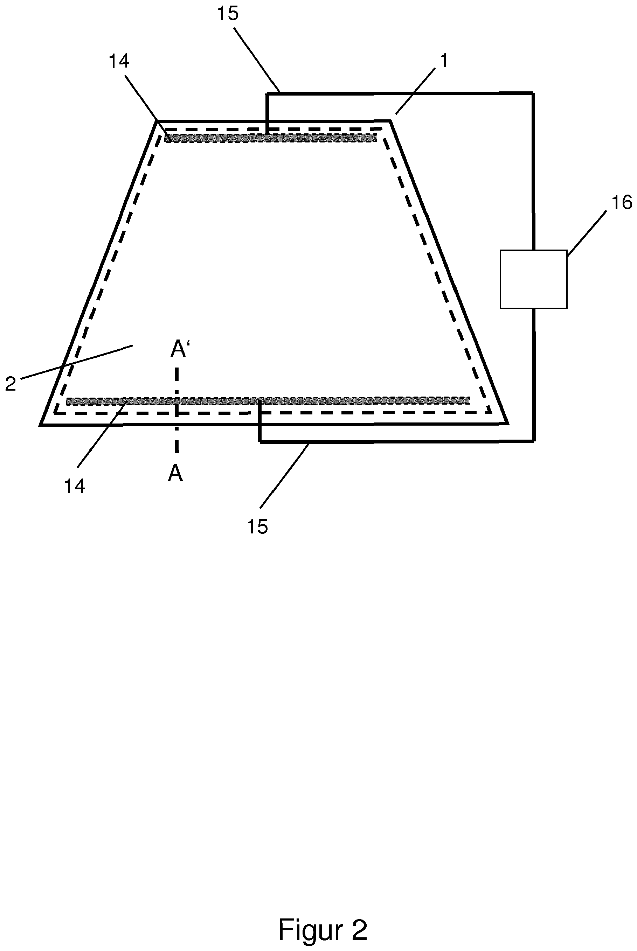

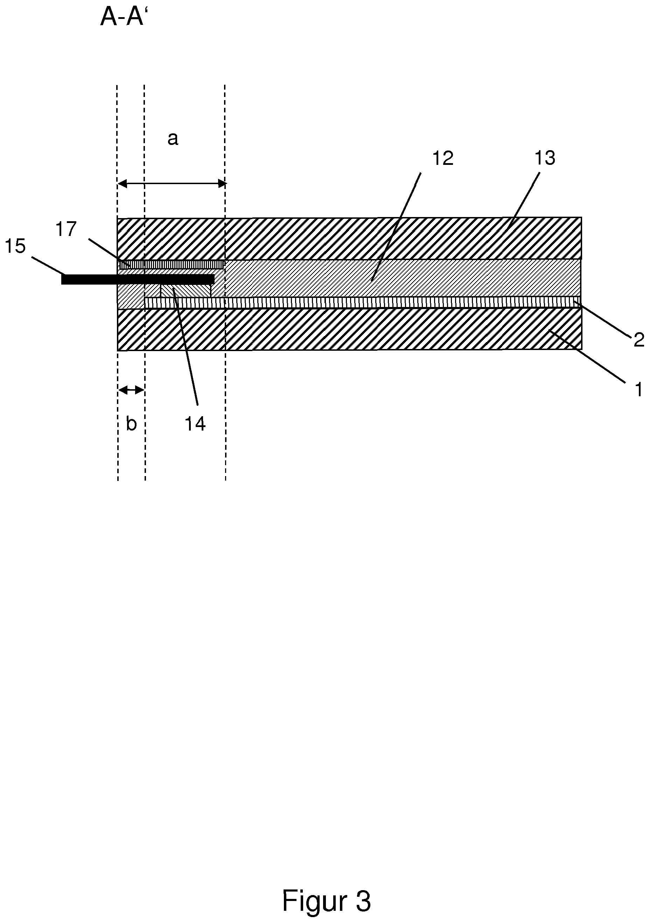

Fig. 2 und Fig. 3 zeigen je ein Detail einer erfindungsgemäßen transparenten Scheibe als Teil einer Verbundscheibe. Die Verbundscheibe ist als Windschutzscheibe eines Personenkraftwagens (PKW) vorgesehen. Das transparente Substrat 1 ist über eine thermoplastische Zwischenschicht 12 verbunden. Figur 2 zeigt eine Draufsicht auf die von der thermoplastischen Zwischenschicht abgewandte Oberfläche des transparenten Substarts 1. Das transparente Substrat 1 ist die dem Innenraum des Personenkraftwagens zugewandte Scheibe. Das transparente Substrat 1 und die zweite Scheibe 13 enthalten Floatglas und weisen eine Dicke von jeweils 2,1 mm auf. Die thermoplastische Zwischenschicht 12 enthält Polyvinylbutyral (PVB) und weist eine Dicke von 0,76 mm auf.

Auf die zur thermoplastischen Zwischenschicht 12 hingewandte Oberfläche es transparenten Substrats 1 ist die elektrisch leitfähige Beschichtung 2 aufgebracht. Die elektrisch leitfähige Beschichtung 2 ist eine elektrisch beheizbare Beschichtung mit einer entsprechenden elektrischen Kontaktierung. Die elektrisch leitfähige Beschichtung 2 erstreckt sich über die gesamte Oberfläche des transparenten Substrats 1 abzüglich eines umlaufenden rahmenförmigen beschichtungsfreien Bereichs mit einer Breite b von ca. 8 mm. Der beschichtungsfreie Bereich dient der elektrischen Isolierung zwischen der spannungsführenden elektrischen Beschichtung 2 und der Fahrzeugkarosserie. Der beschichtungsfreie Bereich ist durch Verklebungen mit der Zwischenschicht 12 hermetisch versiegelt, um die elektrisch leitfähige Beschichtung 2 vor Beschädigung und Korrosion zu schützen.

Am äußeren oberen und unteren Rand des transparenten Substrats 1 ist zur elektrischen Kontaktierung der elektrisch leitfähigen Beschichtung 2 jeweils ein Sammelleiter 14 angeordnet. Die Sammelleiter 14 wurden mittels einer leitfähigen Silberpaste auf die elektrisch leitfähige Beschichtung 2 aufgedruckt und eingebrannt. Die Schichtdicke der eingebrannten Silber-Paste beträgt 15 µm. die Sammelleiter 14 sind elektrisch leitend mit den darunterliegenden Bereichen der elektrisch leitfähigen Beschichtung 2 verbunden.

Der Sammelleiter 14 ist jeweils mit einer Zuleitung 15 verlötet. Die Zuleitungen 15 bestehen aus verzinnten Kupferfolien mit einer Breite von 10 mm und einer Dicke von 0,3 mm. Die elektrisch beheizbare Beschichtung 2 ist über die Sammelleiter 14 und die Zuleitungen 15 mit einer Spannungsquelle 16 verbunden. Die Spannungsquelle 16 ist beispielsweise die 14 V, 24 V oder 40 V Bordspannung eines Kraftfahrzeugs.

Auf der zweiten Scheibe 13 ist am Rand der thermoplastischen Zwischenschicht 12 hingewandten Oberfläche eine opake Farbschicht mit einer Breite a von 20 mm als Abdeckdruck 17 rahmenförmig aufgebracht. Der Abdeckdruck 17 verdeckt die Sicht auf den Klebestrang, mit dem die transparente Scheibe in die Fahrzeugkarosserie eingeklebt wird. Der Abdeckdruck 17 dient gleichzeitig als Schutz des Klebers vor UV-Strahlung und damit als Schutz vor vorzeitiger Alterung des Klebers. Des Weiteren werden die Sammelleiter 14 und die Zuleitungen 15 durch den Abdeckdruck 17 verdeckt.

Es zeigen:
- (1): transparente Substrat
- (2): elektrisch leitfähige Beschichtung
- (3), (3.1), (3.2), (3.3), (3.4): funktionelle Schicht
- (4), (4.1), (4.2), (4.3), (4.4): eine Schicht optisch hochbrechenden Materials
- (5), (5.1), (5.2), (5.3), (5.4): erste Anpassungsschicht
- (6), (6.1), (6.2), (6.3), (6.4): elektrisch leitfähige Schicht
- (7), (7.1), (7.2), (7.3), (7.4): zweite Anpassungsschicht
- (8): Schicht eines dielektrischen Materials mit Brechungsindex ≤ 2,1
- (9): Schicht eines optisch hochbrechenden Materials mit Brechungsindex ≥ 2,1
- (10), (10.2), (10.3), (10.4): Glättungsschicht
- (11): Blockerschicht
- (12): Zwischenschicht
- (13): zweite Scheibe
- (14): Sammelleiter
- (15): Zuleitung
- (16): Spannungsquelle
- (17): Abdeckdruck
- a: Breite des durch (17) abgedeckten Bereichs
- b: Breite der Randentschichtung
- A-A': Schnittlinie

## Patentansprüche

1. Transparente Scheibe, umfassend mindestens ein transparentes Substrat (1) und mindestens eine elektrisch leitfähige Beschichtung (2) auf mindestens einer Oberfläche des transparenten Substrats (1) wobei
die elektrisch leitfähige Beschichtung (2) mindestens vier übereinander angeordnete funktionelle Schichten (3) aufweist und jede funktionelle Schicht (3) mindestens umfasst
• eine Schicht (4) optisch hochbrechenden Materials mit einem Brechungsindex ≥ 1,3,
• oberhalb der Schicht (4) optisch hochbrechenden Materials eine erste Anpassungsschicht (5),
• oberhalb der ersten Anpassungsschicht (5) eine elektrisch leitfähige Schicht (6),
• oberhalb der elektrisch leitfähigen Schicht (6) eine zweite Anpassungsschicht (7), wobei
die Schichtdicke jeweils einer der elektrisch leitfähige Schichten (6) von 5 nm bis 25 nm und die Gesamtschichtdicke aller elektrisch leitfähig Schichten (6) von 20 nm bis 100 nm beträgt,
**dadurch gekennzeichnet, dass** zumindest eine zwischen zwei elektrisch leitfähigen Schichten (6) angeordnete Schicht (4) optisch hochbrechenden Materials
• eine Schicht eines dielektrischen Materials (8) mit einem Brechungsindex kleiner oder gleich als 2,1 und
• eine Schicht eines optisch hochbrechenden Materials (9) mit einem Brechungsindex größer oder gleich 2, 1 umfasst und
oberhalb der obersten funktionellen Schicht (3) eine weitere Schicht (4.1) optisch hochbrechenden Materials mit einem Brechungsindex ≥ 1,9 angeordnet ist.

2. Transparente Scheibe nach Anspruch 1, wobei die Dicke der Schicht optisch hochbrechenden Materials (4) von 10 nm bis 100 nm beträgt.

3. Transparente Scheibe nach Anspruch 1 bis 2, wobei die Schicht hochbrechenden Materials (4) bevorzugt einen Brechungsindex größer oder gleich 1,9 aufweist.

4. Transparente Scheibe nach Anspruch 1 bis 3, wobei die Dicke der zwischen zwei elektrisch leitfähigen Schichten (6) angeordneten Schicht (4.2, 4.3, 4.4) optisch hochbrechenden Materials von 20 nm bis 100 nm beträgt.

5. Transparente Scheibe nach Anspruch 1 bis 4, wobei die Schicht (4.1, 4.2, 4.3, 4.4) optisch hochbrechenden Materials zumindest Siliziumnitrid aufweist.

6. Transparente Scheibe nach Anspruch 1 bis 5, wobei die zwischen zwei elektrisch leitfähigen Schichten (6) angeordneten Schicht (4.2, 4.3, 4.4) optisch hochbrechenden Materials ein Silizium-Zirkonium-Mischnitrid aufweist

7. Transparente Scheibe nach Anspruch 1 bis 6, wobei zumindest zwischen zwei elektrisch leitfähigen Schichten (6) eine Glättungsschicht (10) unterhalb einer der ersten Anpassungsschichten (5) angeordnet ist.

8. Transparente Scheibe nach Anspruch 1 bis 7, wobei die elektrisch leitfähige Schicht (6) zumindest Silber oder eine silberhaltige Legierung aufweist.

9. Transparente Scheibe nach Anspruch 1 bis 8, wobei zumindest eine funktionelle Schicht (3), bevorzugt jede funktionelle Schicht (3), eine an die elektrisch leitfähige Schicht (6) angrenzende Blockerschicht (11) aufweist und die Blockerschicht (11) bevorzugt zumindest Nickel, Chrom oder Legierungen davon enthält.

10. Transparente Scheibe nach Anspruch 9, wobei die Blockerschicht (11) eine Dicke von 0,1 nm bis 5 nm aufweist.

11. Transparente Scheibe nach Anspruch 1 bis 10, wobei das transparente Substrat (1) über zumindest eine thermoplastische Zwischenschicht (12) mit einer zweiten Scheibe (13) zu einer Verbundscheibe verbunden ist und wobei die Verbundscheibe eine Gesamttransmission bevorzugt größer 70 % aufweist.

12. Verfahren zur Herstellung einer transparenten Scheibe mit einer elektrisch leitfähigen Beschichtung (2) nach einem der Ansprüche 1 bis 11, wobei zumindest vier funktionelle Schichten (3) nacheinander auf ein transparentes Substrat (1) aufgebracht werden und zum Aufbringen jeder funktionellen Schicht (3) nacheinander zumindest
• eine Schicht (4) optisch hochbrechenden Materials mit einem Brechungsindex ≥ 1,3,
• oberhalb der Schicht optisch hochbrechenden Materials (4) eine erste Anpassungsschicht (5),
• oberhalb der ersten Anpassungsschicht (5) eine elektrisch leitfähige Schicht (6),
• oberhalb der elektrisch leitfähigen Schicht (6) eine zweite Anpassungsschicht (7),
aufgebracht werden, wobei
die Schichtdicke jeweils einer der elektrisch leitfähige Schichten (6) von 5 nm bis 25 nm und die Gesamtschichtdicke aller elektrisch leitfähig Schichten (6) von 20 nm bis 100 nm beträgt und
zumindest zwischen zwei elektrisch leitfähigen Schichten (6)
• eine Schicht eines dielektrischen Materials (8) mit einem Brechungsindex kleiner oder gleich 2,1 und
• eine Schicht eines optisch hochbrechenden Materials (9) mit einem Brechungsindex größer oder gleich 2, 1
aufgebracht werden und
oberhalb der obersten funktionellen Schicht (3) eine weitere Schicht (4.1) optisch hochbrechenden Materials mit einem Brechungsindex ≥ 1,9 angeordnet ist.

13. Verwendung der transparenten Scheibe nach einem der Ansprüche 1 bis 11 in Fahrzeugen, insbesondere als Windschutzscheibe in Kraftfahrzeugen.

## Claims

1. Transparent pane, comprising at least one transparent substrate (1) and at least one electrically conductive coating (2) on at least one surface of the transparent substrate (1) wherein
the electrically conductive coating (2) has at least four functional layers (3) arranged one atop another and each functional layer (3) at least comprises
• a layer (4) of optically highly refractive material with a refractive index ≥ 1.3,
• a first matching layer (5) above the layer (4) of optically highly refractive material,
• an electrically conductive layer (6) above the first matching layer (5),
• a second matching layer (7) above the electrically conductive layer (6), wherein
the layer thickness of one of the electrically conductive layers (6) is in each case from 5 nm to 25 nm and the total layer thickness of all electrically conductive layers (6) is from 20 nm to 100 nm,
**characterized in that** at least one layer (4) of optically highly refractive material arranged between two electrically conductive layers (6) comprises
• a layer of a dielectric material (8) with a refractive index less than or equal to 2.1 and
• a layer of an optically highly refractive material (9) with a refractive index greater than or equal to 2.1 and
a further layer (4.1) of optically highly refractive material with a refractive index ≥ 1.9 is arranged above the uppermost functional layer (3).

2. Transparent pane according to claim 1, wherein the thickness of the layer of optically highly refractive material (4) is from 10 nm to 100 nm.

3. Transparent pane according to claim 1 through 2, wherein the layer of highly refractive material (4) preferably has a refractive index greater than or equal to 1.9.

4. Transparent pane according to claim 1 through 3, wherein the thickness of the layer (4.2, 4.3, 4.4) of optically highly refractive material arranged between two electrically conductive layers (6) is from 20 nm to 100 nm.

5. Transparent pane according to claim 1 through 4, wherein the layer (4.1, 4.2, 4.3, 4.4) of optically highly refractive material has at least silicon nitride.

6. Transparent pane according to claim 1 through 5, wherein the layer (4.2, 4.3, 4.4) of optically highly refractive material arranged between two electrically conductive layers (6) has a mixed silicon/zirconium nitride.

7. Transparent pane according to claim 1 through 6, wherein, at least between two electrically conductive layers (6), a smoothing layer (10) is arranged below one of the first matching layers (5).

8. Transparent pane according to claim 1 through 7, wherein the electrically conductive layer (6) has at least silver or a silver-containing alloy.

9. Transparent pane according to claim 1 through 8, wherein at least one functional layer (3), preferably each functional layer (3), has a blocker layer (11) adjacent the electrically conductive layer (6) and the blocker layer (11) preferably includes at least nickel, chromium, or alloys thereof.

10. Transparent pane according to claim 9, wherein the blocker layer (11) has a thickness of 0.1 nm to 5 nm.

11. Transparent pane according to claim 1 through 10, wherein the transparent substrate (1) is joined to a second pane (13) via at least one thermoplastic intermediate layer (12) to form a composite pane and wherein the composite pane has total transmittance preferably greater than 70%.

12. Method for producing a transparent pane with an electrically conductive coating (2) according to one of claims 1 through 11, wherein at least four functional layers (3) are successively applied on a transparent substrate (1) and for the application of each functional layer (3) at least
• a layer (4) of optically highly refractive material with a refractive index ≥ 1.3,
• above the layer of optically highly refractive material (4), a first matching layer (5),
• above the first matching layer (5), an electrically conductive layer (6),
• above the electrically conductive layer (6), a second matching layer (7),
are successively applied, wherein
the layer thickness of one of the electrically conductive layers (6) is in each case from 5 nm to 25 nm and the total layer thickness of all electrically conductive layers (6) is from 20 nm to 100 nm, and
at least between two electrically conductive layers (6)
• a layer of a dielectric material (8) with a refractive index less than or equal to 2.1 and
• a layer of an optically highly refractive material (9) with a refractive index greater than or equal to 2.1
are applied, and
above the uppermost functional layer (3), a further layer (4.1) of optically highly refractive material with a refractive index ≥ 1.9 is arranged.

13. Use of the transparent pane according to one of claims 1 through 11 in vehicles, in particular as a windshield in motor vehicles.

## Revendications

1. Vitre transparente, comportant au moins un substrat transparent (1) et au moins un revêtement (2) conducteur de l'électricité sur au moins une surface du substrat transparent (1),
le revêtement (2) conducteur de l'électricité présentant au moins quatre couches fonctionnelles (3) disposées l'une au-dessus de l'autre et chaque couche fonctionnelle (3) comportant au moins
• une couche (4) de matériau à haut indice de réfraction optique ayant un indice de réfraction ≥ 1,3 ;
• au-dessus de la couche (4) de matériau à haut indice de réfraction optique, une première couche d'adaptation (5) ;
• au-dessus de la première couche d'adaptation (5), une couche (6) conductrice de l'électricité ;
• au-dessus de la couche (6) conductrice de l'électricité, une seconde couche d'adaptation (7),
l'épaisseur de couche de chacune des couches (6) conductrices de l'électricité étant de 5 nm à 25 nm et l'épaisseur totale des couches de toutes les couches (6) conductrices de l'électricité étant de 20 nm à 100 nm,
**caractérisée par le fait qu'**au moins une couche (4) de matériau à haut indice de réfraction optique disposée entre deux couches (6) conductrices de l'électricité comporte
• une couche d'un matériau diélectrique (8), ayant un indice de réfraction inférieur ou égal à 2,1 ; et
• une couche d'un matériau à haut indice de réfraction optique (9), ayant un indice de réfraction supérieur ou égal à 2,1 ; et
une autre couche (4.1) de matériau à haut indice de réfraction optique, ayant un indice de réfraction ≥ 1,9, est disposée au-dessus de la couche fonctionnelle (3) la plus au-dessus.

2. Vitre transparente selon la revendication 1, dans laquelle l'épaisseur de la couche de matériau à haut indice de réfraction optique (4) est de 10 nm à 100 nm.

3. Vitre transparente selon l'une des revendications 1 ou 2, dans laquelle la couche de matériau à haut indice de réfraction (4) présente de préférence un indice de réfraction supérieur ou égal à 1,9.

4. Vitre transparente selon l'une des revendications 1 à 3, dans laquelle l'épaisseur de la couche (4.2, 4.3, 4.4) de matériau à haut indice de réfraction optique, disposée entre deux couches (6) conductrices de l'électricité, est de 20 nm à 100 nm.

5. Vitre transparente selon l'une des revendications 1 à 4, dans laquelle la couche (4.1, 4.2, 4.3, 4.4) de matériau à haut indice de réfraction optique présente au moins du nitrure de silicium.

6. Vitre transparente selon l'une des revendications 1 à 5, dans laquelle la couche (4.2, 4.3, 4.4) de matériau de matériau à haut indice de réfraction optique, disposée entre deux couches (6) conductrices de l'électricité, présente un nitrure mixte de silicium-zirconium.

7. Vitre transparente selon l'une des revendications 1 à 6, dans laquelle au moins entre deux couches (6) conductrices de l'électricité, est disposée une couche de lissage (10) au-dessous de l'une des premières couches d'adaptation (5).

8. Vitre transparente selon l'une des revendications 1 à 7, dans laquelle la couche (6) conductrice de l'électricité présente au moins de l'argent ou un alliage à teneur en argent.

9. Vitre transparente selon l'une des revendications 1 à 8, dans laquelle au moins une couche fonctionnelle (3), de préférence chaque couche fonctionnelle (3), présente une couche de blocage (11) adjacente à la couche (6) conductrice de l'électricité et la couche de blocage (11) contient, de préférence, au moins du nickel , du chrome ou des alliages de ceux-ci.

10. Vitre transparente selon la revendication 9, dans laquelle la couche de blocage (11) présente une épaisseur de 0,1 nm à 5 nm.

11. Vitre transparente selon l'une des revendications 1 à 10, dans laquelle le substrat transparent (1) est relié à une seconde vitre (13) par au moins une couche intermédiaire thermoplastique (12) pour former une vitre feuilletée, et dans laquelle la vitre feuilletée présente une transmission totale de préférence supérieure à 70 %.

12. Procédé de fabrication d'une vitre transparente ayant un revêtement (2) conducteur de l'électricité selon l'une des revendications 1 à 11, dans lequel au moins quatre couches fonctionnelles (3) sont appliquées successivement sur un substrat transparent (1) et, pour l'application de chaque couche fonctionnelle (3), sont appliqués successivement au moins
• une couche de matériau à haut indice de réfraction optique (4) ayant un indice de réfraction ≥ 1,3 ;
• au-dessus de la couche de matériau à haut indice de réfraction optique (4), une première couche d'adaptation (5) ;
• au-dessus de la première couche d'adaptation (5), une couche (6) conductrice de l'électricité ;
• au-dessus de la couche (6) conductrice de l'électricité, une seconde couche d'adaptation (7),
l'épaisseur de couche de chacune des couches (6) conductrices de l'électricité étant de 5 nm à 25 nm et l'épaisseur totale des couches de toutes les couches (6) conductrices de l'électricité étant de 20 nm à 100 nm ; et au moins entre deux couches (6) conductrices de l'électricité sont appliquées
• une couche d'un matériau diélectrique (8), ayant un indice de réfraction inférieur ou égal à 2,1 ; et
• une couche d'un matériau à haut indice de réfraction optique (9), ayant un indice de réfraction supérieur ou égal à 2,1 ; et
une autre couche (4.1) de matériau à haut indice de réfraction optique, ayant un indice de réfraction ≥ 1,9, est disposée au-dessus de la couche fonctionnelle (3) la plus au-dessus.

13. Utilisation de la vitre transparente selon l'une des revendications 1 à 11 dans des véhicules, en particulier en tant que pare-brise dans des véhicules automobiles.
